# EUROPEAN PATENT APPLICATION

(11) **EP 4 280 176 A1**
(43) Date of publication of application: **22.11.2023**
(21) Application number: 23173302.3
(22) Date of filing: 15.05.2023
(51) Int. Cl.: G06V 20/13, G06V 20/10

(54) **DATA ACQUISITION APPARATUS, DATA ACQUISITION METHOD, AND DATA ACQUISITION PROGRAM**

(30) Priority: 19.05.2022 JP 2022082659
(71) Applicant: Yokogawa Electric Corporation, Musashino-shi, Tokyo 180-8750 (JP)
(72) Inventor: Uchida, Yukihiro, Musashino-shi, Tokyo (JP)
(74) Representative: Grünecker Patent- und Rechtsanwälte PartG mbB

(57) **Abstract**

[Solution] To provide a data acquisition apparatus including a first image data acquisition unit for acquiring first image data showing a first image obtained by photographing a target area from a satellite, a calculation unit for calculating a vegetation index in the target area by using the first image data, a determination unit for determining whether the vegetation index satisfies a predetermined evaluation criterion, and a second image data acquisition unit for acquiring second image data showing a second image obtained by photographing the target area at a higher resolution than the first image if the vegetation index does not satisfy the evaluation criterion.

## Description

### TECHNICAL FIELD

The present invention relates to a data acquisition apparatus, a data acquisition method, and a data acquisition program.

### BACKGROUND

Patent document 1 describes, "photographing is desirably performed at a time when many farm fields are at a time reaching an expected growth stage".

### PRIOR ART DOCUMENT

### PATENT DOCUMENT

Patent document 1: Japanese Patent Application Publication No. 2021-006017
Patent document 2: Japanese Patent Application Publication No. 2000-194833
Patent document 3: Japanese translation publication of a PCT rout patent application No. 2019-532380

### SUMMARY

According to a first aspect of the present invention, a data acquisition apparatus is provided. The data acquisition apparatus includes a first image data acquisition unit for acquiring first image data showing a first image obtained by photographing a target area from a satellite, a calculation unit for calculating a vegetation index in the target area by using the first image data, a determination unit for determining whether the vegetation index satisfies a predetermined evaluation criterion, and a second image data acquisition unit for acquiring second image data showing a second image obtained by photographing the target area at a higher resolution than the first image if the vegetation index does not satisfy the evaluation criterion.

In the data acquisition apparatus, the first image data acquisition unit may be configured to acquire a plurality of first image data showing a plurality of first images obtained by photographing the target area at a plurality of points of time, the calculation unit may be configured to calculate vegetation indexes at the plurality of points of time individually, each of the vegetation indexes being the vegetation index, by using the plurality of first image data, and the determination unit may be configured to determine whether a statistic of the vegetation indexes at the plurality of points of time satisfies the evaluation criterion.

In any of the data acquisition apparatuses, the statistic of the vegetation indexes may be a maximum value of the vegetation indexes at the plurality of points of time.

Any of the data acquisition apparatuses may further include a data output unit for outputting the second image data.

Any of the data acquisition apparatuses may further include a data analysis unit for analyzing the second image data, and an analysis result output unit for outputting a result of the analysis.

Any of the data acquisition apparatuses may further include a criterion setting unit for setting the evaluation criterion based on a track record of the vegetation index.

Any of the data acquisition apparatuses may further include an environmental data acquisition unit for acquiring environmental data showing a photographing environment in which the first image is photographed, and the criterion setting unit may be configured to set the evaluation criterion by using the environmental data.

In any of the data acquisition apparatuses, the criterion setting unit may be configured to set the evaluation criterion by using a learning model that is machine-learned such that the evaluation criterion is output in response to inputting the environmental data.

Any of the data acquisition apparatuses may further include a designation unit for designating a resolution of the second image in accordance with the vegetation index.

In any of the data acquisition apparatuses, the designation unit may be configured to designate a resolution of the second image based on a difference between the vegetation index and the evaluation criterion.

According to a second aspect of the present invention, a data acquisition method is provided. The data acquisition method is executed by a computer, and comprises acquiring, by the computer, first image data showing a first image obtained by photographing a target area from a satellite, calculating, by the computer, a vegetation index in the target area by using the first image data, determining, by the computer, whether the vegetation index satisfies a predetermined evaluation criterion, and acquiring, by the computer, second image data showing a second image obtained by photographing the target area at a higher resolution than the first image if the vegetation index does not satisfy the evaluation criterion.

According to a third aspect of the present invention, a data acquisition program is provided. The data acquisition program is executed by a computer, and causes the computer to function as a first image data acquisition unit for acquiring first image data showing a first image obtained by photographing a target area from a satellite, a calculation unit for calculating a vegetation index in the target area by using the first image data, a determination unit for determining whether the vegetation index satisfies a predetermined evaluation criterion, and a second image data acquisition unit for acquiring second image data showing a second image obtained by photographing the target area at a higher resolution than the first image if the vegetation index does not satisfy the evaluation criterion.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an example of a block diagram of a remote sensing system 1 that may include a data acquisition apparatus 100 according to a first embodiment.
Fig. 2 illustrates an example of a flow diagram of a data acquisition method by the data acquisition apparatus 100 according to the first embodiment.
Fig. 3 illustrates an example of a block diagram of the remote sensing system 1 that may include the data acquisition apparatus 100 according to a second embodiment.
Fig. 4 illustrates an example of a block diagram of the remote sensing system 1 that may include the data acquisition apparatus 100 according to a third embodiment.
Fig. 5 illustrates an example of a block diagram of the remote sensing system 1 that may include the data acquisition apparatus 100 according to a fourth embodiment.
Fig. 6 illustrates an example of a computer 9900 in which a plurality of aspects of the present invention may be entirely or partially embodied.

### DESCRIPTION OF EXEMPLARY EMBODIMENTS

Hereinafter, embodiments of the present invention will be described, but the following embodiments do not limit the invention according to the claims. In addition, not all of the combinations of features described in the embodiments are essential for a solution of the invention.

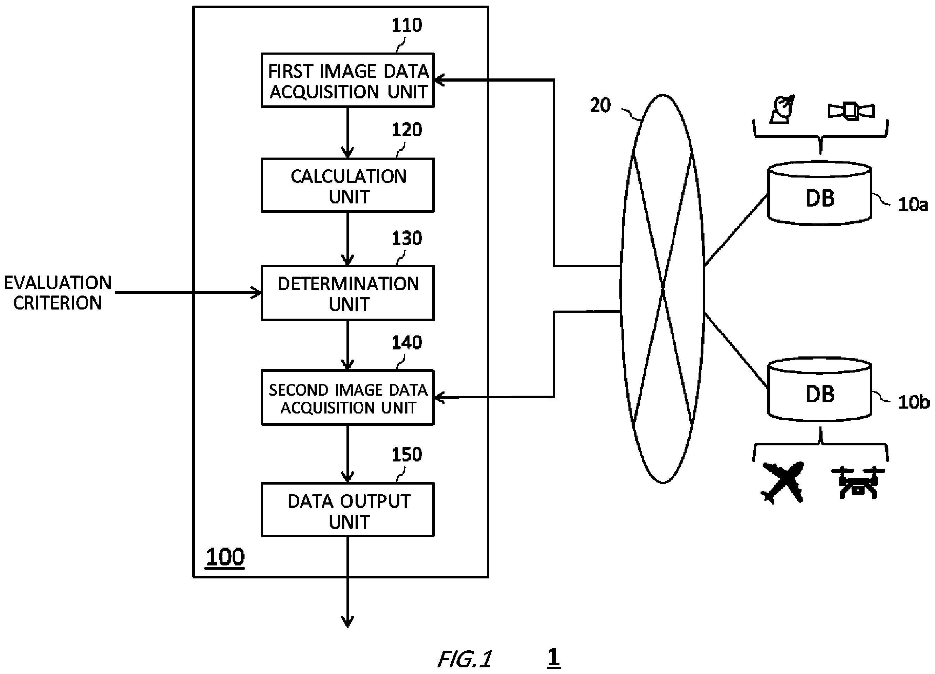

Fig. 1 illustrates an example of a block diagram of a remote sensing system 1 that may include a data acquisition apparatus 100 according to a first embodiment. Note that, these blocks are functional blocks that are each functionally divided, and may not be necessarily required to be matched with actual apparatus configurations. That is, in the present drawing, an apparatus indicated by one block may not be necessarily required to be configured by one apparatus. In addition, in the present drawing, apparatuses indicated by separate blocks may not be necessarily required to be configured by separate apparatuses. The same applies to subsequent block diagrams.

In remote sensing, there has been an attempt to use image data obtained by photographing a target area to monitor vegetation in the area. In this case, in order to monitor the vegetation specifically, it is preferable to use image data of a high resolution. However, achieving a high resolution may raise the purchasing expense and the communication expense of the image data. In addition, a photographing range per image may become narrower as the resolution becomes higher, and in order to monitor a wide area, processing may become complicated such as necessity to acquire and synthesize a plurality of image data. Accordingly, frequent acquisition of image data of a high resolution may not be realistic. Therefore, in the remote sensing system 1, the data acquisition apparatus 100 triggers acquisition of image data of a relatively high resolution by using image data of a relatively low resolution. The remote sensing system 1 includes a database 10, a network 20, and the data acquisition apparatus 100.

The database 10 stores therein various image data showing images that are obtained by photographing various areas at various timings. In addition to the image data, the database 10 may also store therein other various data useful in acquiring the image data. In the present drawing, a case in which the database 10 includes a first database 10a and a second database 10b (will be collectively referred to as the database 10) is illustrated as an example.

The first database 10a stores therein satellite image data showing a satellite image that is photographed from a satellite. Such a satellite may be an artificial satellite that observes the Earth by using electric waves, infrared rays, and visible light, and it is also called an earth observation satellite or a remote sensing satellite. For example, upon receiving a command for commanding photographing of a satellite image, the satellite may photograph a satellite image in response to the command. Then, a ground station may receive satellite image data showing the photographed satellite image from the satellite, and supplies this to a processing station. Furthermore, the processing station may perform various processings (segmentation processing, radiometric correction, geometric correction, and the like) on the satellite image data. The first database 10a may store therein the satellite image data on which processings are performed in this manner for example, while associating the satellite image data with metadata such as date and time of photographing and processing contents. In this regard, the satellite image may include an image obtained by photographing an area at least part of which is photographed in another satellite image in duplicate, at a higher resolution than said another satellite image.

The following describes, as an example, a case in which the first database 10a stores therein visible/reflecting infrared remote sensing data. Accordingly, the satellite image data stored in the first database 10a may be data of a multispectral image.

In general, the reflectivity characteristic of each spectrum differs in each of various objects (water, soil, plants, and the like) constituting the ground surface, depending on the type. For example, the main reflection region of "water" is the visible region (0.4 to 0.7 µm). With regard to "soil", the reflection tends to become stronger in longer wavelengths, and its main reflection region is the short wavelength infrared region (1.3 to 3 µm). "Plants" have a characteristic of efficiently absorbing the visible region with the function of a photosynthetic pigment, while also reflecting the near-infrared region (0.7 to 1.3 µm). The data of a multispectral image recording electromagnetic waves of different spectra can be regarded as important data in understanding spectral reflection characteristics of such various objects constituting the ground surface.

However, the present invention is not limited to this. The first database 10a can also store therein other remote sensing data such as thermal infrared remote sensing data and microwave remote sensing data.

The second database 10b stores therein aerial image data showing an aerial image that is photographed from an airplane, a drone, or the like. Various processings may also be performed on such aerial image data. The second database 10b may store therein the aerial image data on which processings are performed in this manner for example, while associating the aerial image data with metadata such as date and time of photographing and processing contents. In this regard, the aerial image may be an image obtained by photographing an area at least part of which is photographed in a satellite image in duplicate, at a higher resolution than said satellite image.

The aerial image data stored in the second database 10b may also be data of a multispectral image. However, the present invention is not limited to this. The second database 10b can also store therein other remote sensing data as in the case of the first database 10a. In addition, with regard to the satellite image data stored in the first database 10a and the aerial image data stored in the second database 10b, the image types are not necessarily required to be the same, and the image types may be different from each other.

A user can acquire or purchase the satellite image data stored in the first database 10a or the aerial image data stored in the second database 10b through, for example, a satellite operator or an agency.

The network 20 is a network connecting a plurality of computers. For example, the network 20 may be a global network in which a plurality of computer networks are mutually connected, and as an example, the network 20 may be the Internet using an Internet protocol. Alternatively, the network 20 may be achieved by a dedicated line. The network 20 mutually connects various apparatuses in the remote sensing system 1, in the present drawing, the database 10 and the data acquisition apparatus 100.

The data acquisition apparatus 100 may be a computer such as a personal computer (PC), a tablet type computer, a smart phone, a workstation, a server computer, or a general-purpose computer, or it may be a computer system in which a plurality of computers are connected. Such a computer system is also a computer in a broad sense. In addition, the data acquisition apparatus 100 may be implemented by one or more virtual computer environments that are executable within a computer. Alternatively, the data acquisition apparatus 100 may be a dedicated computer that is designed for data acquisition, or it may be dedicated hardware that is achieved by dedicated circuitry. In addition, when connectable to the Internet, the data acquisition apparatus 100 may be achieved by cloud computing.

The data acquisition apparatus 100 monitors vegetation in a target area by using image data of a relatively low resolution, and by having a vegetation index not satisfying an evaluation criterion as a trigger, acquires image data of a relatively high resolution. The data acquisition apparatus 100 includes a first image data acquisition unit 110, a calculation unit 120, a determination unit 130, a second image data acquisition unit 140, and a data output unit 150.

The first image data acquisition unit 110 acquires first image data showing a first image obtained by photographing a target area from a satellite. In this regard, the target area is an area of interest (AOI: Area of Interest) that a user wishes to monitor vegetation. The first image data acquisition unit 110 supplies the acquired first image data to the calculation unit 120.

The calculation unit 120 calculates a vegetation index in the target area by using the first image data. In this regard, the vegetation index is an index representing the quantity and the level of activity of plants. The calculation unit 120 supplies the calculated vegetation index to the determination unit 130.

The determination unit 130 determines whether the vegetation index satisfies a predetermined evaluation criterion. The determination unit 130 supplies a result of the determination to the second image data acquisition unit 140.

If the vegetation index does not satisfy the evaluation criterion, the second image data acquisition unit 140 acquires second image data showing a second image obtained by photographing target area at a higher resolution than the first image. The second image data acquisition unit 140 supplies the acquired second image data to the data output unit 150.

The data output unit 150 outputs the second image data. An acquisition method of high-resolution image data by the data acquisition apparatus 100 having such functional parts will be specifically described by using a flow.

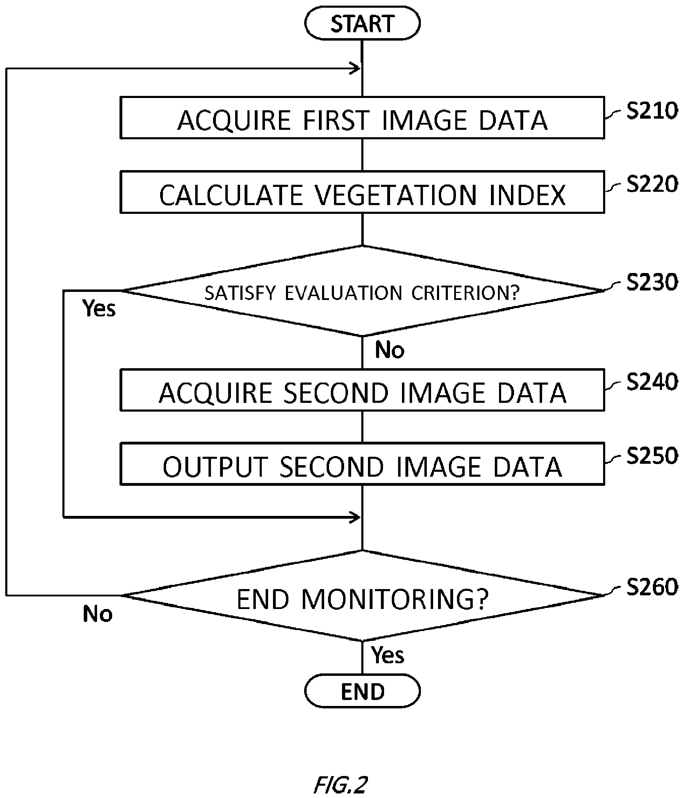

Fig. 2 illustrates an example of a flow diagram of a data acquisition method by the data acquisition apparatus 100 according to the first embodiment.

In step S210, the data acquisition apparatus 100 acquires first image data. For example, the first image data acquisition unit 110 may acquire the first image data showing a first image obtained by photographing a target area from a satellite. As an example, the first image data acquisition unit 110 accepts designation of the first image. In response to this, for example, it is assumed that a user designates the target area with various types of information such as an address, a place name, a target object, and a postal code, or designates the target area with geographic coordinates (for example, latitude/longitude) that are given to the various types of information by geocoding. In addition, it is assumed that the user designates a photographing timing with date and time of the photographing. In this case, the first image data acquisition unit 110 may search the first database 10a by using the designated target area and the photographing timing as search keys. Furthermore, the first image data acquisition unit 110 may acquire satellite image data searched from the first database 10a as the first image data, via the network 20.

However, the present invention is not limited to this. The first image data acquisition unit 110 may acquire the first image data via various types of memory devices or a user input, or may acquire the first image data from another apparatus that is different from the first database 10a. In addition, if the designated image has not been archived, the first image data acquisition unit 110 may transmit a command commanding photographing to the satellite via the ground station, and may acquire data of a satellite image that is photographed in response to the command as the first image data.

In this regard, the first image is preferably a plurality of images obtained by photographing the target area from the satellite at a plurality of different points of time. Accordingly, the first image data acquisition unit 110 may acquire a plurality of first image data showing a plurality of first images obtained by photographing the target area at a plurality of points of time. As an example, the first image data acquisition unit 110 may acquire a plurality of first image data showing a plurality of first images obtained by photographing the target area regularly (for example, daily) for a predetermined period (for example, 1 week). The first image data acquisition unit 110 supplies the first image data acquired in this manner for example, to the calculation unit 120.

In step S220, the data acquisition apparatus 100 calculates the vegetation index. For example, the calculation unit 120 may calculate the vegetation index in the target area by using the first image data acquired in step S210. As an example, the calculation unit 120 may calculate the vegetation index by performing an interband operation on information of different wavelength ranges of the first images which are multispectral images.

In this regard, an index that is called the Normalized Difference Vegetation Index (NDVI) utilizing the spectral reflection characteristic of plants has been widely used in vegetation monitoring by remote sensing.

The NDVI is calculated by a mathematical expression, "NDVI=(NIR-RED)/(NIR+RED)". In this regard, the NIR represents the reflectivity of the near-infrared region, and RED represents the reflectivity of the visible-region red. That is, the NDVI is obtained by dividing the difference between the reflectivities of the near-infrared band and the red band, which are reflected by plants, by the sum. The NDVI is represented by a numerical value that is normalized to values from -1 to 1, and the value becomes larger as the vegetation becomes intense. The calculation unit 120 may calculate the vegetation index in the target area by using such NDVI for example.

Note that, although the description above presented the case of using the NDVI as the vegetation index as an example, the present invention is not limited to this. Instead of or in addition to the NDVI, the calculation unit 120 may use other indexes such as the Extended Vegetation Index (EVI) and the Leaf Area Index (LAI) to calculate the vegetation index in the target area.

In this regard, if a plurality of first image data are acquired in step S210, the calculation unit 120 may calculate vegetation indexes at a plurality of points of time individually by using the plurality of first image data. As an example, the calculation unit 120 may calculate the NDVI of each day of 1 week. The calculation unit 120 supplies the calculated vegetation index to the determination unit 130.

In step S230, the data acquisition apparatus 100 determines whether the vegetation index satisfies an evaluation criterion. For example, the determination unit 130 may determine whether the vegetation index calculated in step S230 satisfies a predetermined evaluation criterion. As an example, the determination unit 130 may determine whether the calculated NDVI is equal to or greater than a predetermined threshold. Furthermore, if the NDVI is equal to or greater than the threshold, the determination unit 130 may determine that the vegetation index satisfies the evaluation criterion. In addition, if the NDVI is smaller than the threshold, the determination unit 130 may determine that the vegetation index does not satisfy the evaluation criterion. Note that the evaluation criterion (a threshold or the like) used at this time may be a fixed value that is previously designated by a user, or it may be a variable value that varies in accordance with various photographing environment. This will be described below.

In this regard, if vegetation indexes at a plurality of points of time are calculated in step S220, the determination unit 130 may determine whether a statistic of the vegetation indexes at the plurality of points of time satisfies the evaluation criterion. In general, if the earth surface is covered with a cloud, the NDVI takes a lower value as compared to when the earth surface is not covered with a cloud. Therefore, influence by clouds can be minimized by using the maximum NDVI value during a period in which the quantity and the activity of plants can be regarded as being constant, as a representative value of the period. Accordingly, the statistic of the vegetation indexes is preferably the maximum value of the vegetation indexes at the plurality of points of time.

However, the present invention is not limited to this. Instead of or in addition to the maximum value, another statistic value such as an average value or a median value may be used as the statistic. The determination unit 130 supplies a result of the determination to the second image data acquisition unit 140.

If the vegetation index satisfies the evaluation criterion (if Yes) as the result of the determination, the data acquisition apparatus 100 proceeds the processing to step S260. That is, the data acquisition apparatus 100 omits step S240 and step S250. On the other hand, if the vegetation index does not satisfy the evaluation criterion (if No), the data acquisition apparatus 100 proceeds the processing to step S240.

In step S240, the data acquisition apparatus 100 acquires second image data. For example, if the vegetation index does not satisfy the evaluation criterion, the second image data acquisition unit 140 may acquire the second image data showing a second image obtained by photographing the target area at a higher resolution than the first image. As an example, the second image data acquisition unit 140 may designate a timing that is closest to the photographing timing of the first image, as the photographing timing of the second image. Note that, if the first image is a plurality of images that are photographed at a plurality of points of time, the second image data acquisition unit 140 may designate a timing that is closest to the photographing timing of the newest first image, as the photographing timing of the second image. Then, the second image data acquisition unit 140 may search the second database 10b by using the designated target area and the photographing timing as the search keys. Furthermore, the second image data acquisition unit 140 may acquire aerial image data searched from the second database 10b as the second image data, via the network 20.

However, the present invention is not limited to this. The second image data acquisition unit 140 may acquire the second image data via various types of memory devices or a user input, or may acquire the second image data from another apparatus that is different from the second database 10b. In particular, the second image data acquisition unit 140 can acquire the second image data from the first database 10a. In this case, the second image data acquisition unit 140 may search the first database 10a by targeting only satellite images of a higher resolution than the resolution of the first image. In addition, if the designated image has not been archived, the second image data acquisition unit 140 may transmit a command commanding photographing to an airplane, a drone, or the like, or to a satellite, and may acquire data of an aerial image or a satellite image that is photographed in response to the command as the second image data. The second image data acquisition unit 140 supplies the acquired second image data to the data output unit 150.

In step S250, the data acquisition apparatus 100 outputs the second image data. For example, the data output unit 150 may output the second image data acquired in step S240 by displaying it on a monitor. However, the present invention is not limited to this. The data output unit 150 may output the second image data by printing it out, or may output the second image data by transmitting it to another apparatus.

In step S260, the data acquisition apparatus 100 determines whether to end the monitoring. Furthermore, if the monitoring does not end as the result of the determination (if No), the data acquisition apparatus 100 returns the processing to step S210, and continues the flow. On the other hand, if the monitoring ends as the result of the determination (if Yes), the data acquisition apparatus 100 ends the flow. Note that, at this time, the data acquisition apparatus 100 may determine whether to end the monitoring in accordance with a predetermined rule (a time trigger, an event trigger, or the like), or may determine whether to end the monitoring in response to an instruction from a user.

In remote sensing, it is preferable to use image data of a high resolution to specifically monitor vegetation, but achievement of a higher resolution may raise costs and may make the processing complicated. Conventionally, a growth situation of an agricultural crop is predicted based on meteorological data, and a time at which the agricultural crop reaches a particular growth stage is determined as an optimal timing of photographing of a remote sensing image. However, in this case, even if deterioration of vegetation associated with a climate change, an artificial forest destruction, or the like occurs, it has been difficult to analyze the cause thereof.

Meanwhile, the data acquisition apparatus 100 monitors vegetation in a target area by using image data of a relatively low resolution, and by having a vegetation index not satisfying an evaluation criterion as a trigger, acquires image data of a relatively high resolution. Thus, according to the data acquisition apparatus 100, vegetation can be monitored by using image data of a low resolution, while acquiring image data of a high resolution only when deterioration of the vegetation, forest destruction, or the like occurs. Accordingly, according to the data acquisition apparatus 100, a frequency of acquiring image data of a high resolution can be reduced under normal circumstances, and if some kind of abnormality occurs in the vegetation, image data of a sufficient resolution can be acquired to analyze the cause.

In addition, the data acquisition apparatus 100 may further include a functionality of outputting the image data of a high resolution acquired in this manner. Thus, the data acquisition apparatus 100 can provide a user with information for analyzing the cause of abnormality in vegetation, and can contribute to early clarification of the cause.

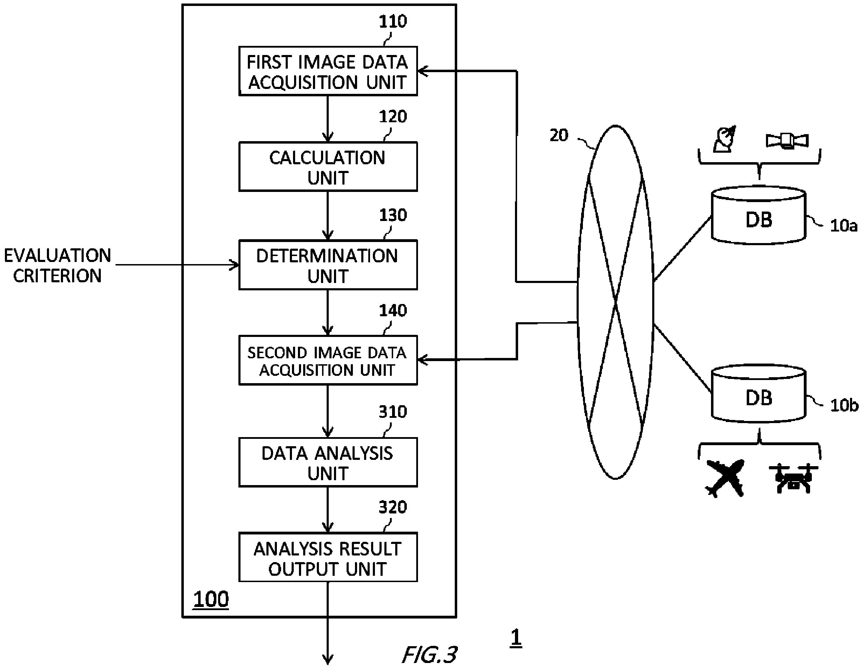

Fig. 3 illustrates an example of a block diagram of the remote sensing system 1 that may include the data acquisition apparatus 100 according to a second embodiment. In Fig. 3, members having the same functionalities and configurations as those in Fig. 1 are denoted by the same signs, and description thereof will be omitted except for the following differences. In the embodiment described above, the case in which the data acquisition apparatus 100 outputs the acquired second image data as it is, is described as an example. However, in the second embodiment, the data acquisition apparatus 100 analyzes the acquired second image data, and outputs the result. The data acquisition apparatus 100 according to the second embodiment further includes a data analysis unit 310 and an analysis result output unit 320, instead of or in addition to the data output unit 150. In addition, in the data acquisition apparatus 100 according to the second embodiment, the second image data acquisition unit 140 supplies the acquired second image data to the data analysis unit 310.

The data analysis unit 310 analyzes the second image data acquired by the second image data acquisition unit 140. For example, the data analysis unit 310 may analyze the second image data, and generate an NDVI image. In addition, if there is a history of analyzing the second image data in the past, the data analysis unit 310 may detect a variation of vegetation in a target area based on a difference between the NDVI image this time and the NDVI image in the past. The data analysis unit 310 supplies the result analyzed in this manner for example, to the analysis result output unit 320.

The analysis result output unit 320 outputs the result analyzed by the data analysis unit 310. For example, the analysis result output unit 320 may output the NDVI image by displaying it on a monitor. However, the present invention is not limited to this. The analysis result output unit 320 may output the analysis result by printing it out, or may output the analysis result by transmitting it to another apparatus. In addition, if the variation of the vegetation exceeds a predetermined criterion, the analysis result output unit 320 may generate an alert indicating that effect.

In this manner, the data acquisition apparatus 100 according to the second embodiment may further include a functionality of analyzing the second image data, in addition to the functionality of acquiring the second image data. Thus, with the data acquisition apparatus 100 according to the second embodiment, the functionality of acquiring image data of a high resolution and the functionality of analyzing the image data of a high resolution can be achieved by one apparatus.

In addition, the data acquisition apparatus 100 according to the second embodiment may further include a functionality of outputting a result of the analysis. Thus, with the data acquisition apparatus 100 according to the second embodiment, a user can be provided with an analysis result of a high accuracy using the image data of a high resolution.

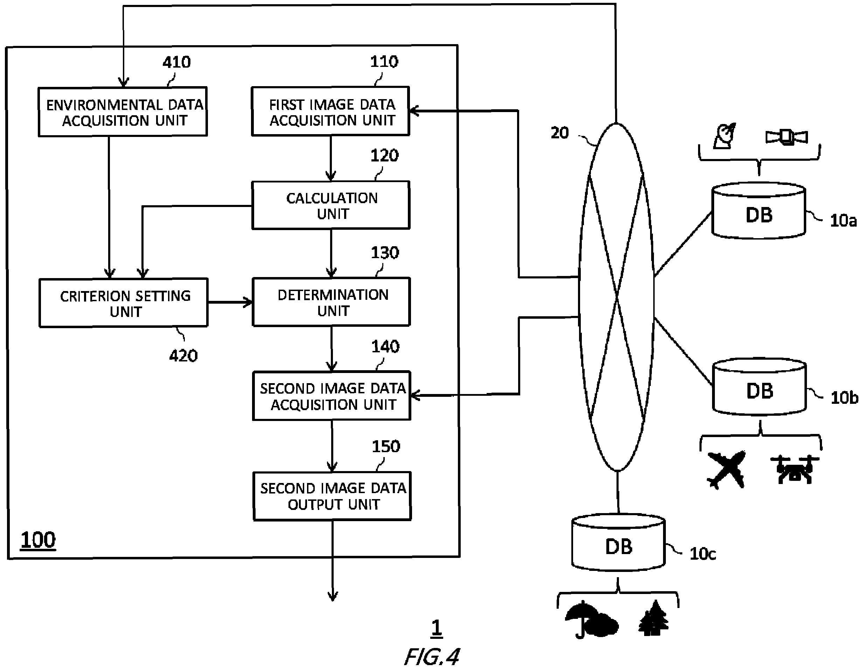

Fig. 4 illustrates an example of a block diagram of the remote sensing system 1 that may include the data acquisition apparatus 100 according to a third embodiment. In Fig. 4, members having the same functionalities and configurations as those in Fig. 1 are denoted by the same signs, and description thereof will be omitted except for the following differences. In the embodiment described above, the case in which the data acquisition apparatus 100 uses a predetermined fixed value as the evaluation criterion in determining the vegetation index is described as an example. However, in the third embodiment, the data acquisition apparatus 100 uses a variable value that varies in accordance with various photographing environments as the evaluation criterion. In the third embodiment, the database 10 further includes a third database 10c. In addition, the data acquisition apparatus 100 according to the third embodiment further includes an environmental data acquisition unit 410 and a criterion setting unit 420. Further, in the data acquisition apparatus 100 according to the third embodiment, the calculation unit 120 supplies the calculated vegetation index to the criterion setting unit 420, in addition to the determination unit 130.

The third database 10c stores therein environmental data showing various photographing environments in various areas. Such environmental data may include meteorological data announced by, for example, the Meteorological Agency, Private Meteorological Service Support Centers, meteorological business operators and the like (will be referred to as the Meteorological Agency and the like). However, the present invention is not limited to this. The environmental data may include various data that may affect photographing of a satellite image such as data showing distributions of vegetation (as an example, the distribution of deciduous forests and the distribution of evergreen forests).

The environmental data acquisition unit 410 acquires the environmental data showing the photographing environment in which the first image is photographed. For example, the environmental data acquisition unit 410 may search the third database 10c by using the target area, the photographing timing, and the type of the environmental data of the first image as the search keys. In this regard, for example, weathers, covering clouds, distributions of vegetation, and the like can be mentioned as the type of the environmental data. Furthermore, the environmental data acquisition unit 410 may download the searched data as, for example, a Comma Separated Value (CSV) file via the network 20. The environmental data acquisition unit 410 may acquire the environmental data in this manner for example. The environmental data acquisition unit 410 supplies the acquired environmental data to the criterion setting unit 420.

The criterion setting unit 420 sets the evaluation criterion based on a track record of the vegetation index. For example, the criterion setting unit 420 may perform statistical processing on the vegetation index calculated by the calculation unit 120 in the past, and may set the evaluation criterion in accordance with a statistical result. At this time, the criterion setting unit 420 may set the evaluation criterion by using the environmental data acquired by the environmental data acquisition unit 410. That is, the criterion setting unit 420 may set a variable value that varies in accordance with various photographing environments as the evaluation criterion. As an example, if a relationship between each type of the environmental data and the evaluation criterion to be recommended is already known previously from the track record of the vegetation index, the criterion setting unit 420 may set a result that is operated in response to inputting the environmental data to a previously defined function as the evaluation criterion.

On the other hand, if the relationship between each type of the environmental data and the evaluation criterion to be recommended is unknown, the criterion setting unit 420 may use a machine learning model. For example, the criterion setting unit 420 may define the model as f (E, W) =O, in which the environmental data is denoted by E, the weight is denoted by W, and the model output is denoted by O. Furthermore, during a learning period, the criterion setting unit 420 may update the weight W such that the model output O, which is output in response to inputting the environmental data E to the model, becomes closer to the track record value of the vegetation index. Furthermore, during an operation period, the criterion setting unit 420 may set the evaluation criterion by using the learning model, which is machine-learned such that the evaluation criterion is output in response to inputting the environmental data in this manner.

The criterion setting unit 420 supplies the evaluation criterion set in this manner for example, to the determination unit 130. In response to this, the determination unit 130 may determine whether the vegetation index calculated by the calculation unit 120 satisfies the evaluation criterion set by the criterion setting unit 420.

In this manner, the data acquisition apparatus 100 according to the third embodiment may set the evaluation criterion based on the track record of the vegetation index. Thus, with the data acquisition apparatus 100 according to the third embodiment, instead of using a predetermined fixed value, a variable value that takes into consideration the track record of the vegetation index can be used as the evaluation criterion in determining the vegetation index.

In addition, the data acquisition apparatus 100 according to the third embodiment may acquire environmental data showing the photographing environment in which the first image is photographed, and may set the evaluation criterion by using the environmental data. As described above, if the earth surface is covered with a cloud, the vegetation index such as the NDVI takes a lower value as compared to when the earth surface is not covered with a cloud. In addition, with regard to the vegetation index such as the NDVI, a seasonal change such as a decrease in the value due to fall of leaves in the winter season or an increase in the value in the summer season is caused in an area where deciduous forests are largely distributed, while such seasonal change is small in an area where evergreen forests are largely distributed. Therefore, the data acquisition apparatus 100 according to the third embodiment may set a variable value that varies in accordance with such photographing environments as the evaluation criterion. Thus, with the data acquisition apparatus 100 according to the third embodiment, the vegetation index can be determined by using an optimal evaluation criterion that takes into consideration various photographing environments.

In addition, the data acquisition apparatus 100 according to the third embodiment can also set the evaluation criterion by using the machine learning model. Thus, with the data acquisition apparatus 100 according to the third embodiment, the optimal evaluation criterion can be set even if the relationship between each type of the environmental data and the evaluation criterion to be recommended is unknown.

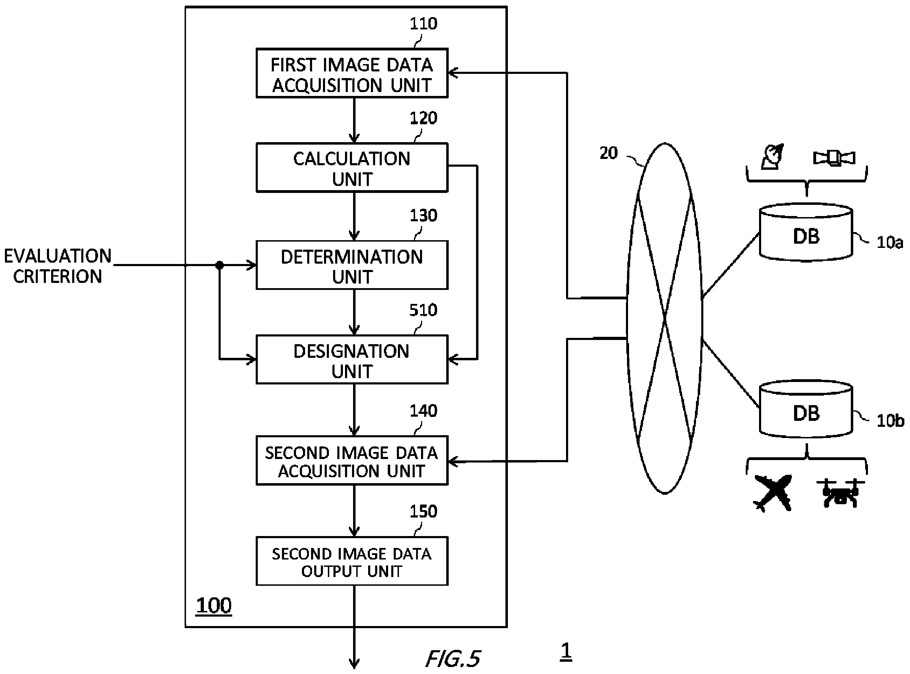

Fig. 5 illustrates an example of a block diagram of the remote sensing system 1 that may include the data acquisition apparatus 100 according to a fourth embodiment. In Fig. 5, members having the same functionalities and configurations as those in Fig. 1 are denoted by the same signs, and description thereof will be omitted except for the following differences. In the embodiment described above, the case in which the resolution of the second image may be any resolution that is higher than the resolution of the first image is described as an example. However, in the fourth embodiment, the data acquisition apparatus 100 designates the resolution of the second image. The data acquisition apparatus 100 according to the fourth embodiment further includes a designation unit 510. Further, in the data acquisition apparatus 100 according to the fourth embodiment, the calculation unit 120 supplies the calculated vegetation index to the designation unit 510, in addition to the determination unit 130. In addition, in the data acquisition apparatus 100 according to the fourth embodiment, the determination unit 130 supplies a result of the determination to the designation unit 510 instead of the second image data acquisition unit 140.

The designation unit 510 designates the resolution of the second image in accordance with the vegetation index. For example, if the vegetation index calculated by the calculation unit 120 is determined as not satisfying the evaluation criterion in the determination unit 130, the designation unit 510 may designate the resolution of the second image in accordance with that vegetation index. In this regard, if there is a large difference between the vegetation index and the evaluation criterion, a degree of abnormality in the vegetation might be high, and thus it is considered that an analysis of a high accuracy is required. Accordingly, the designation unit 510 may designate the resolution of the second image such that the resolution becomes higher as the difference between the vegetation index and the evaluation criterion becomes larger. The designation unit 510 can designate the resolution of the second image based on the difference between the vegetation index and the evaluation criterion in this manner for example.

Note that, at this time, the designation unit 510 may designate the resolution of the second image as it is, or may designate an acceptable range (for example, a lower limit value or the like) of the resolution of the second image. The designation unit 510 notifies the second image data acquisition unit 140 of the designated resolution. In response to this, the second image data acquisition unit 140 may search the second image with the designated resolution, and may acquire the second image data.

In this manner, the data acquisition apparatus 100 according to the fourth embodiment may designate the resolution of the second image in accordance with the vegetation index. Thus, with the data acquisition apparatus 100 according to the fourth embodiment, the second image data can be acquired with an optimal resolution that takes into consideration the vegetation index.

In addition, the data acquisition apparatus 100 according to the fourth embodiment may designate the resolution of the second image based on the difference between the vegetation index and the evaluation criterion. Thus, with the data acquisition apparatus 100 according to the fourth embodiment, if a gap between the vegetation index and the evaluation criterion is large due to a reason such as a high degree of abnormality in the vegetation, the second image data can be acquired such that its resolution becomes higher.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits, and may include integrated circuits (IC) and/or discrete circuits. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer-readable medium may include any tangible device that can store instructions to be executed by a suitable device, and as a result, the computer-readable medium having instructions stored thereon includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like; and a conventional procedural programming language such as a "C" programming language or a similar programming language.

Computer-readable instructions may be provided to a processor of a general-purpose computer, special purpose computer, or other programmable data processing apparatuses, or to programmable circuitry, locally or via a local area network (LAN), wide area network (WAN) such as the Internet, or the like, to execute the computer-readable instructions to create means for performing operations specified in the flowcharts or block diagrams. Examples of the processor include a computer processor, a processing unit, a microprocessor, a digital signal processor, a controller, a microcontroller, and the like.

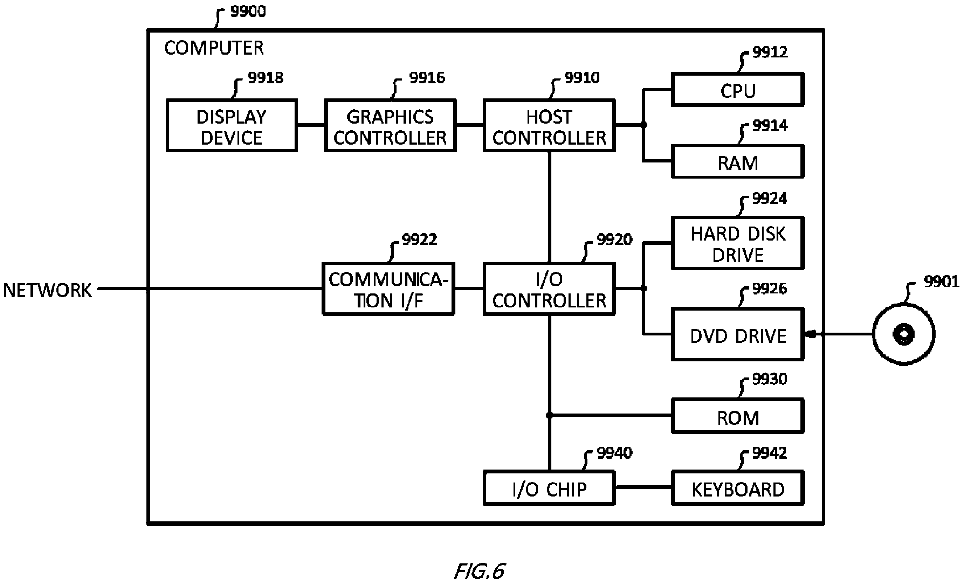

Fig. 6 illustrates an example of a computer 9900 through which a plurality of aspects of the present invention may be entirely or partially embodied. A program that is installed in the computer 9900 can cause the computer 9900 to function as or execute operations associated with the apparatus of the embodiment of the present invention or one or more sections of the apparatus, and/or cause the computer 9900 to execute the processes of the embodiment of the present invention or steps thereof. Such a program may be executed by a CPU 9912 so as to cause the computer 9900 to execute certain operations associated with some or all of the flowcharts and the blocks in the block diagrams described herein.

The computer 9900 according to the present embodiment includes the CPU 9912, a RAM 9914, a graphics controller 9916 and a display device 9918, which are mutually connected by a host controller 9910. The computer 9900 further includes input/output units such as a communication interface 9922, a hard disk drive 9924, a DVD drive 9926 and an IC card drive, which are connected to the host controller 9910 via an input/output controller 9920. The computer also includes legacy input/output units such as a ROM 9930 and a keyboard 9942, which are connected to the input/output controller 9920 via an input/output chip 9940.

The CPU 9912 operates according to programs stored in the ROM 9930 and the RAM 9914, thereby controlling each unit. The graphics controller 9916 acquires image data generated by the CPU 9912 on a frame buffer or the like provided in the RAM 9914 or in itself, and causes the image data to be displayed on the display device 9918.

The communication interface 9922 communicates with other electronic devices via a network. The hard disk drive 9924 stores programs and data that are used by the CPU 9912 within the computer 9900. The DVD drive 9926 reads programs or data from a DVD-ROM 9901, and provides the hard disk drive 9924 with the programs or data via the RAM 9914. The IC card drive reads the programs and the data from the IC card, and/or writes the programs and the data to the IC card.

The ROM 9930 stores therein a boot program or the like executed by the computer 9900 at the time of activation, and/or a program depending on the hardware of the computer 9900. The input/output chip 9940 may also connect various input/output units via a parallel port, a serial port, a keyboard port, a mouse port or the like to the input/output controller 9920.

A program is provided by a computer-readable medium such as the DVD-ROM 9901 or the IC card. The program is read from the computer-readable medium, installed into the hard disk drive 9924, RAM 9914, or ROM 9930, which are also examples of a computer-readable medium, and executed by CPU 9912. The information processing described in these programs is read into the computer 9900, resulting in cooperation between a program and the above-mentioned various types of hardware resources. An apparatus or method may be constituted by realizing the operation or processing of information in accordance with the usage of the computer 9900.

For example, when communication is performed between the computer 9900 and an external device, the CPU 9912 may execute a communication program loaded onto the RAM 9914 to instruct communication processing to the communication interface 9922, based on the processing described in the communication program. The communication interface 9922, under control of the CPU 9912, reads transmission data stored on a transmission buffer region provided in a recording medium such as the RAM 9914, the hard disk drive 9924, DVD-ROM 9901, or the IC card, and transmits the read transmission data to a network or writes reception data received from a network to a reception buffer region or the like provided on the recording medium.

Also the CPU 9912 may cause all or a necessary portion of a file or a database to be read into the RAM 9914, wherein the file or the database has been stored in an external recording medium such as the hard disk drive 9924, the DVD drive 9926 (DVD-ROM 9901), the IC card, etc., and perform various types of processing on the data on the RAM 9914. The CPU 9912 then writes back the processed data to the external recording medium.

Various types of information such as various types of programs, data, tables, and databases may be stored in a recording medium and subjected to information processing. The CPU 9912 may perform various types of processing on the data read from the RAM 9914, which includes various types of operations, information processing, condition judging, conditional branch, unconditional branch, search/replacement of information, etc., as described throughout this disclosure and designated by an instruction sequence of programs, and writes the result back to the RAM 9914. Also the CPU 9912 may search for information in a file, a database, etc., in the recording medium. For example, when a plurality of entries, each having an attribute value of a first attribute associated with an attribute value of a second attribute, are stored in the recording medium, the CPU 9912 may search for an entry matching the condition whose attribute value of the first attribute is designated, from among the plurality of entries, and read the attribute value of the second attribute stored in the entry, thereby acquiring the attribute value of the second attribute associated with the first attribute satisfying the predetermined condition.

The above-described program or software modules may be stored in the computer-readable medium on or near the computer 9900. Also a recording medium such as a hard disk or a RAM provided in a server system connected to a dedicated communication network or the Internet can be used as the computer-readable medium, thereby providing the program to the computer 9900 via the network.

While the embodiments of the present invention have been described, the technical scope of the present invention is not limited to the above-described embodiments. It is apparent to persons skilled in the art that various alterations or improvements can be added to the above-described embodiments. It is also apparent from the description of the claims that the embodiments to which such alterations or improvements are made can be included in the technical scope of the present invention.

The operations, procedures, steps, and stages of each process performed by an apparatus, system, program, and method shown in the claims, specification, or drawings can be performed in any order as long as the order is not indicated by "prior to," "before," or the like and as long as the output from a previous process is not used in a later process. Even if the process flow is described using phrases such as "first" or "then" in the claims, specification, or drawings, it does not necessarily mean that the process must be performed in this order.

### EXPLANATION OF REFERENCES

1: remote sensing system; 10: database; 10a: first database; 10b: second database; 10c: third database; 100: data acquisition apparatus; 110: first image data acquisition unit; 120: calculation unit; 130: determination unit; 140: second image data acquisition unit; 150: data output unit; 310: data analysis unit; 320: analysis result output unit; 410: environmental data acquisition unit; 420: criterion setting unit; 510: designation unit; 9900: computer; 9901: DVD-ROM; 9910: host controller; 9912: CPU; 9914: RAM; 9916: graphics controller; 9918: display device; 9920: input/output controller; 9922: communication interface; 9924: hard disk drive; 9926: DVD drive; 9930: ROM; 9940: input/output chip; 9942: keyboard.

## Claims

1. A data acquisition apparatus, comprising:
a first image data acquisition unit for acquiring first image data showing a first image obtained by photographing a target area from a satellite;
a calculation unit for calculating a vegetation index in the target area by using the first image data;
a determination unit for determining whether the vegetation index satisfies a predetermined evaluation criterion; and
a second image data acquisition unit for acquiring second image data showing a second image obtained by photographing the target area at a higher resolution than the first image if the vegetation index does not satisfy the evaluation criterion.

2. The data acquisition apparatus according to claim 1, wherein
the first image data acquisition unit is configured to acquire a plurality of first image data showing a plurality of first images obtained by photographing the target area at a plurality of points of time,
the calculation unit is configured to calculate vegetation indexes at the plurality of points of time individually, each of the vegetation indexes being the vegetation index, by using the plurality of first image data, and
the determination unit is configured to determine whether a statistic of the vegetation indexes at the plurality of points of time satisfies the evaluation criterion.

3. The data acquisition apparatus according to claim 2, wherein the statistic of the vegetation indexes is a maximum value of the vegetation indexes at the plurality of points of time.

4. The data acquisition apparatus according to any one of claims 1 to 3, further comprising a data output unit for outputting the second image data.

5. The data acquisition apparatus according to any one of claims 1 to 3, further comprising:
a data analysis unit for analyzing the second image data; and
an analysis result output unit for outputting a result of the analysis.

6. The data acquisition apparatus according to any one of claims 1 to 3, further comprising a criterion setting unit for setting the evaluation criterion based on a track record of the vegetation index.

7. The data acquisition apparatus according to claim 6, further comprising an environmental data acquisition unit for acquiring environmental data showing a photographing environment in which the first image is photographed,
wherein the criterion setting unit is configured to set the evaluation criterion by using the environmental data.

8. The data acquisition apparatus according to claim 7, wherein the criterion setting unit is configured to set the evaluation criterion by using a learning model that is machine-learned such that the evaluation criterion is output in response to inputting the environmental data.

9. The data acquisition apparatus according to any one of claims 1 to 3, further comprising a designation unit for designating a resolution of the second image in accordance with the vegetation index.

10. The data acquisition apparatus according to claim 9, wherein the designation unit is configured to designate a resolution of the second image based on a difference between the vegetation index and the evaluation criterion.

11. A data acquisition method executed by a computer, comprising:
acquiring, by the computer, first image data showing a first image obtained by photographing a target area from a satellite;
calculating, by the computer, a vegetation index in the target area by using the first image data;
determining, by the computer, whether the vegetation index satisfies a predetermined evaluation criterion; and
acquiring, by the computer, second image data showing a second image obtained by photographing the target area at a higher resolution than the first image if the vegetation index does not satisfy the evaluation criterion.

12. A data acquisition program executed by a computer, the data acquisition program causing the computer to function as:
a first image data acquisition unit for acquiring first image data showing a first image obtained by photographing a target area from a satellite;
a calculation unit for calculating a vegetation index in the target area by using the first image data;
a determination unit for determining whether the vegetation index satisfies a predetermined evaluation criterion; and
a second image data acquisition unit for acquiring second image data showing a second image obtained by photographing the target area at a higher resolution than the first image if the vegetation index does not satisfy the evaluation criterion.
